# EUROPEAN PATENT APPLICATION

(11) **EP 4 187 384 A1**
(43) Date of publication of application: **31.05.2023**
(21) Application number: 21854562.2
(22) Date of filing: 28.06.2021
(51) Int. Cl.: G06F 9/50

(54) **METHOD AND SYSTEM FOR BINDING MULTIPLE PHYSICAL DEVICES AS VIRTUAL DEVICE, AND RELATED DEVICE**

(30) Priority: 03.08.2020 CN 202010769410; 20.11.2020 CN 202011308800
(71) Applicant: Huawei Technologies Co., Ltd., Shenzhen, Guangdong 518129 (CN)
(72) Inventor: YANG, Xuewen, Shenzhen, Guangdong 518129 (CN); CAI, Zhifang, Shenzhen, Guangdong 518129 (CN)
(74) Representative: Gill Jennings & Every LLP
(86) International application number: PCT/CN2021/102751
(87) International publication number: WO 2022/028149

(57) **Abstract**

This application provides a method for bonding a plurality of physical devices into a virtual device, a system, and a related device. The method includes: creating a plurality of physical device sets based on the plurality of physical devices, where at least two of the plurality of physical device sets include a same physical device; creating, for any one of the plurality of physical device sets, one or more virtual devices corresponding to the physical device set; and receiving, by using the virtual device, data delivered by a service application. The plurality of physical device sets are created, and a virtual device corresponding to each physical device set is created for each physical device set, to receive the data delivered by the service application. This can ensure that all the physical devices participate in data processing, thereby effectively improving resource utilization of the physical devices and implementing load balancing of the plurality of physical devices.

## Description

This application claims priority to Chinese Patent Application No. 202010769410.8, filed with the China National Intellectual Property Administration on August 3, 2020 and entitled "METHOD AND APPARATUS FOR BONDING PLURALITY OF PHYSICAL DEVICES INTO VIRTUAL DEVICE", and claims priority to Chinese Patent Application No. 202011308800.1, filed with the China National Intellectual Property Administration on November 20, 2020 and entitled "METHOD FOR BONDING PLURALITY OF PHYSICAL DEVICES INTO VIRTUAL DEVICE, SYSTEM, AND RELATED DEVICE", which are incorporated herein by reference in their entireties.

### TECHNICAL FIELD

The present invention relates to the field of cloud computing technologies, and in particular, to a method for bonding a plurality of physical devices into a virtual device, a system, and a related device.

### BACKGROUND

Currently, to improve resource utilization and system performance and reliability, a technology for bonding a plurality of physical devices is becoming increasingly popular. For example, a network interface card bonding (bonding) technology in a Linux system can abstract (bond) a plurality of physical network interface cards into one logical network interface card in the system, to effectively increase a network throughput and implement functions such as network redundancy and load balancing.

After a plurality of physical devices are bonded into one virtual device, a working mode needs to be configured for the virtual device. Usually, the working mode is configured as an active-standby mode. In this mode, only one of the plurality of physical devices serves as a primary device, while all other physical devices serve as secondary devices. In other words, only one physical device is in an active (active) state, and another physical device is switched to the active state only after the currently active physical device becomes faulty. This mode provides a fault tolerance mechanism, and can improve availability of a network connection. However, this mode also reduces resource utilization. When there are N physical devices, resource utilization is only 1/N, and there is no load balancing capability.

Therefore, in a scenario of bonding a plurality of physical devices into one virtual device, how to improve resource utilization and how to enhance a load balancing capability of the plurality of physical devices are urgent problems to be resolved at present.

### SUMMARY

Embodiments of the present invention disclose a method for bonding a plurality of physical devices into a virtual device, a system, and a related device. A plurality of physical device sets are created based on the plurality of physical devices, and a virtual device corresponding to different physical devices is created for each physical device set, to support service applications, thereby improving resource utilization and implementing load balancing between the plurality of physical devices.

According to a first aspect, this application provides a method for bonding a plurality of physical devices into a virtual device, including: A server creates a plurality of physical device sets based on the plurality of physical devices, where at least two of the plurality of physical device sets include a same physical device; the server creates, for any one of the plurality of physical device sets, one or more virtual devices corresponding to the physical device set; and the server receives, by using the virtual device, data delivered by a service application.

Optionally, the physical devices in this application include but are not limited to a NIC, a GPU, and an NPU.

In the solution provided in this application, when there are a plurality of physical devices, the server creates a plurality of physical device sets based on the plurality of physical devices, so as to bond the plurality of physical devices. One physical device may belong to different physical device sets. Then, the server creates, for each physical device set, a virtual device corresponding to the physical device set, and receives, by using the created virtual device, data delivered by an upper-layer service application. This can ensure that all the physical devices participate in data processing, thereby effectively improving resource utilization and implementing load balancing between the plurality of physical devices.

With reference to the first aspect, in a possible implementation of the first aspect, the server provides an input interface, where the input interface is used to prompt a user to input creation parameters of the physical device sets; and the server obtains the creation parameters by using the input interface, and creates the plurality of physical device sets based on the creation parameters.

Optionally, the input interface includes a configuration interface, an application programming interface API, and an input template.

In the solution provided in this application, the user may input the creation parameters by using the configuration interface or the API interface provided by the server, to create the plurality of physical device sets based on the creation parameters, so that the plurality of physical device sets can simultaneously perform service processing, thereby improving resource utilization.

With reference to the first aspect, in a possible implementation of the first aspect, the server creates a first physical device set and a second physical device set based on a first physical device and a second physical device, where the first physical device set and the second physical device set each includes a primary device and at least one secondary device, the primary device of the first physical device set is the first physical device, and the primary device of the second physical device set is the second physical device.

In the solution provided in this application, when creating the physical device sets, the server ensures that primary devices of the physical device sets are different, thereby ensuring that each physical device can participate in service processing and improving resource utilization.

With reference to the first aspect, in a possible implementation of the first aspect, the server creates a first virtual device based on the first physical device set; and if service traffic of the first physical device exceeds a first preset threshold, the server adjusts a correspondence between the first virtual device and the first physical device set, so that the first virtual device corresponds to the second physical device set.

In the solution provided in this application, the server may flexibly adjust a correspondence between a virtual device and each physical device set based on service traffic of the physical device set, and may offload the service traffic to a physical device set with relatively light service load, thereby implementing load balancing of a plurality of physical devices.

With reference to the first aspect, in a possible implementation of the first aspect, the first physical device set includes the first physical device and the second physical device; and if service traffic of the first physical device exceeds a second preset threshold, the server adjusts a flow direction of the service traffic, so that the first physical device set delivers the service traffic by using the second physical device.

In the solution provided in this application, the server may adjust service traffic for physical devices in a same physical device set, so that when the service traffic exceeds a preset threshold of a primary device, the server may offload the service traffic to a secondary device for processing, thereby implementing load balancing in the same physical device set.

With reference to the first aspect, in a possible implementation of the first aspect, for any one of the plurality of physical device sets, the server specifies, based on an affinity between the service application and each secondary device in the any one of the plurality of physical device sets, a priority for each secondary device to become a primary device.

In the solution provided in this application, the server may specify a priority by using an affinity between a service application and each secondary device, to ensure that when a primary device is faulty, a secondary device with a high priority replaces the primary device to continue work and ensure service continuity.

With reference to the first aspect, in a possible implementation of the first aspect, the server specifies, based on a connection relationship between a processor corresponding to the service application and each secondary device, the priority for each secondary device to become the primary device; or the server specifies, based on a size of an available resource of each secondary device, the priority for each secondary device to become the primary device; or the server specifies, based on a size of a resource to be consumed for upgrading each secondary device to the primary device, the priority for each secondary device to become the primary device.

In the solution provided in this application, the server may flexibly specify the priority of each secondary device based on different constraint conditions, so that when the primary device is faulty, a secondary device that meets a requirement can become a new primary device, thereby ensuring service continuity and system stability.

With reference to the first aspect, in a possible implementation of the first aspect, the virtual device receives test information delivered by the service application, where the test information is used to test processing delays of virtual devices corresponding to the plurality of physical device sets; and the server determines the processing delays of the virtual devices corresponding to the plurality of physical device sets, and selects a virtual device corresponding to a minimum processing delay to receive the data delivered by the service application.

In the solution provided in this application, after creating the virtual devices, the server determines the processing delay of each virtual device to complete virtual device selection; and matches the virtual device with the minimum processing delay with the service application, thereby shortening a service processing time and improving service processing efficiency.

With reference to the first aspect, in a possible implementation of the first aspect, the server specifies priorities of the one or more virtual devices corresponding to the any one of the plurality of physical device sets, so that the one or more virtual devices corresponding to the any one of the plurality of physical device sets use resources based on the specified priorities.

In the solution provided in this application, the server specifies the priorities of the virtual devices, to ensure that when resources are limited, the virtual devices can use the resources based on the priorities, thereby improving quality of service.

According to a second aspect, this application provides a computing device, including: a creation unit, configured to create a plurality of physical device sets based on a plurality of physical devices, where at least two of the plurality of physical device sets include a same physical device; where the creation unit is further configured to create, for any one of the plurality of physical device sets, one or more virtual devices corresponding to the physical device set; and a processing unit, configured to receive, by using the virtual device, data delivered by a service application.

With reference to the second aspect, in a possible implementation of the second aspect, the computing device further includes a receiving unit, where the receiving unit is configured to provide an input interface, and the input interface is used to prompt a user to input creation parameters of the physical device sets; and the creation unit is further configured to create the plurality of physical device sets based on the creation parameters.

With reference to the second aspect, in a possible implementation of the second aspect, the creation unit is specifically configured to create a first physical device set and a second physical device set based on a first physical device and a second physical device, where the first physical device set and the second physical device set each include a primary device and at least one secondary device, the primary device of the first physical device set is the first physical device, and the primary device of the second physical device set is the second physical device.

With reference to the second aspect, in a possible implementation of the second aspect, the creation unit is further configured to create a first virtual device based on the first physical device set; and the processing unit is further configured to: if service traffic of the first physical device exceeds a first preset threshold, adjust a correspondence between the first virtual device and the first physical device set, so that the first virtual device corresponds to the second physical device set.

With reference to the second aspect, in a possible implementation of the second aspect, the first physical device set includes the first physical device and the second physical device; and the processing unit is further configured to: if service traffic of the first physical device exceeds a second preset threshold, adjust a flow direction of the service traffic, so that the first physical device set delivers the service traffic by using the second physical device.

With reference to the second aspect, in a possible implementation of the second aspect, the processing unit is further configured to specify, based on an affinity between the service application and each secondary device in the any one of the plurality of physical device sets, a priority for each secondary device to become a primary device.

With reference to the second aspect, in a possible implementation of the second aspect, the processing unit is specifically configured to specify, based on a connection relationship between a processor corresponding to the service application and each secondary device, the priority for each secondary device to become the primary device; or specify, based on a size of an available resource of each secondary device, the priority for each secondary device to become the primary device; or specify, based on a size of a resource to be consumed for upgrading each secondary device to the primary device, the priority for each secondary device to become the primary device.

With reference to the second aspect, in a possible implementation of the second aspect, the receiving unit is further configured to receive test information delivered by the service application, where the test information is used to test processing delays of virtual devices corresponding to the plurality of physical device sets; and the processing unit is further configured to: determine the processing delays of the virtual devices corresponding to the plurality of physical device sets, and select a virtual device corresponding to a minimum processing delay to receive the data delivered by the service application.

With reference to the second aspect, in a possible implementation of the second aspect, the processing unit is further configured to specify priorities of the one or more virtual devices corresponding to the any one of the plurality of physical device sets, so that the one or more virtual devices corresponding to the any one of the plurality of physical device sets use resources based on the specified priorities.

According to a third aspect, this application provides a computing device. The computing device includes a processor and a memory. The processor is connected to the memory by using an internal bus, the memory stores instructions, and the processor invokes the instructions in the memory to perform the method provided in any one of the first aspect or the possible implementations of the first aspect.

According to a fourth aspect, this application provides a computer storage medium. The computer storage medium stores a computer program. When the computer program is executed by a processor, the method provided in any one of the first aspect or the possible implementations of the first aspect can be implemented.

According to a fifth aspect, this application provides a computer program product. The computer program includes instructions. When the computer program is executed by a computer, the computer is enabled to perform the method provided in any one of the first aspect or the possible implementations of the first aspect.

### BRIEF DESCRIPTION OF DRAWINGS

To describe the technical solutions in embodiments of the present invention more clearly, the following briefly describes the accompanying drawings for describing embodiments. It is clear that the accompanying drawings in the following descriptions show some embodiments of the present invention, and persons of ordinary skill in the art may still derive other drawings from these accompanying drawings without creative efforts.
FIG. 1 is a schematic diagram of a scenario in which a service application is supported by using a technology for bonding a plurality of physical devices according to an embodiment of this application;
FIG. 2 is a schematic diagram of another scenario in which a service application is supported by using a technology for bonding a plurality of physical devices according to an embodiment of this application;
FIG. 3 is a schematic diagram of a system architecture according to an embodiment of this application;
FIG. 4 is a schematic diagram of another system architecture according to an embodiment of this application;
FIG. 5 is a schematic flowchart of a method for bonding a plurality of physical devices into a virtual device according to an embodiment of this application;
FIG. 6 is a schematic diagram of a configuration interface according to an embodiment of this application;
FIG. 7 is a schematic diagram of specifying a priority of a secondary device according to an embodiment of this application;
FIG. 8 is a schematic diagram of a system structure according to an embodiment of this application;
FIG. 9 is a schematic diagram of a structure of a computing device according to an embodiment of this application; and
FIG. 10 is a schematic diagram of a structure of another computing device according to an embodiment of this application.

### DESCRIPTION OF EMBODIMENTS

The following clearly and completely describes technical solutions in embodiments of this application with reference to accompanying drawings. The described embodiments are merely some rather than all of the embodiments of this application.

First, some terms and related technologies in this application are explained and described for ease of understanding by persons skilled in the art.

A physical device is a device that provides a service for an application, and includes but is not limited to a network interface controller (network interface card, NIC) or a network port on the NIC, a graphics processing unit (graphics processing unit, GPU), an embedded neural-network processing unit (neural-network processing unit, NPU), and the like.

A physical device set is a set obtained by bonding a plurality of physical devices. The physical device set is externally embodied as one device. For example, for network interface card bonding in a Linux system, a network interface driver is modified to enable a plurality of network interface cards to be externally embodied as one independent Ethernet interface device and have a same IP address. Because the physical device set is a set obtained by bonding a plurality of physical devices, when a specific physical device or a port on a specific physical device is faulty and unavailable, a service may continue to be provided by using a redundant physical device or port according to a configuration policy, so as to improve system performance and reliability.

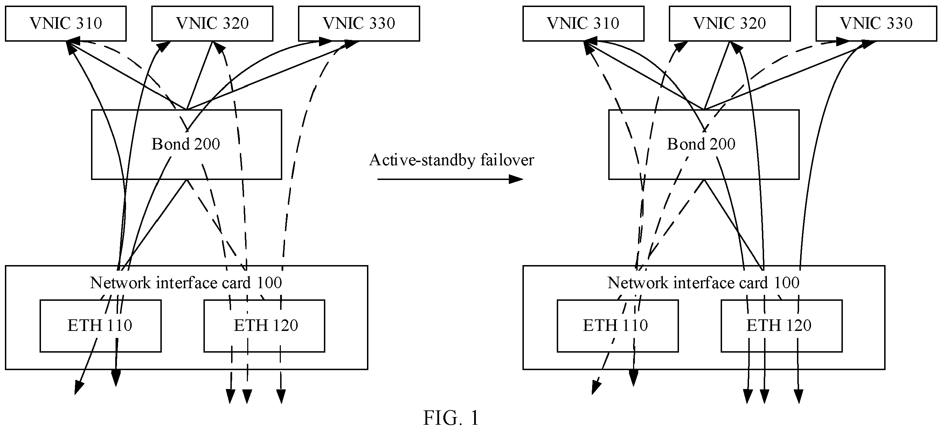

In a scenario in which a service application is supported by using a technology for bonding a plurality of physical devices, a plurality of physical devices need to be bonded to obtain one physical device set, and one or more virtual physical devices are obtained through mapping based on the physical device set. Finally, an upper-layer service application is supported by using the virtual physical device. As shown in FIG. 1, a network interface card NIC 100 provides two physical network interfaces, that is, an Ethernet interface ETH 110 and an Ethernet interface 120, and the ETH 110 and the ETH 120 are bonded to obtain a physical device set, namely, a bond 200. The bond 200 is a bond in an active-standby mode. When the bond 200 is created, the ETH 110 may be specified as a primary device and the ETH 120 as a secondary device. Certainly, alternatively, the ETH 120 may be specified as a primary device and the ETH 120 as a secondary device. After the bond 200 is obtained, a plurality of virtual network interface cards such as a vNIC 310, a vNIC 320, and a vNIC 330 are obtained by mapping by using the bond 200. After the mapping is completed, the upper-layer service application may use any virtual network interface card obtained by mapping or directly use the bond 200 to perform communication. When the ETH 110 is the primary device, in a normal communication process, data of all upper-layer service applications is aggregated to the ETH 110 by using the virtual network interface card and the bond 200, and finally is processed and forwarded by the ETH 110. In other words, data forwarding processing is completed on the data of all the upper-layer service applications by using only the ETH 110 rather than the ETH 120. Particularly, when the ETH 110 is faulty or an external link corresponding to the ETH 110 is faulty, and data forwarding processing cannot be completed, a bond mechanism detects that the ETH 110 is abnormal, and then triggers an active-standby failover. For example, a Linux system monitors a link by using a link monitoring parameter to detect a link connection status of a network interface. A value of the link monitoring parameter may be set to 100, indicating that the system detects the link connection status once every 100 milliseconds. If it is detected that the link of the ETH 110 is disconnected, it indicates that the ETH 110 is abnormal, and the primary device of the bond 200 is switched to the ETH 120. The data of all the upper-layer service applications is aggregated to the ETH 120 by using the virtual network interface card and the bond 200, and the ETH 120 replaces the ETH 110 to complete data forwarding processing.

It can be learned that, in the application scenario shown in FIG. 1 in which a physical device includes a plurality of physical network interfaces, the plurality of network interfaces are bonded into one bond. As a result, at one moment, only one physical network interface is in a working state, and the other physical network interface is in an idle state, causing low resource utilization and no load balancing capability.

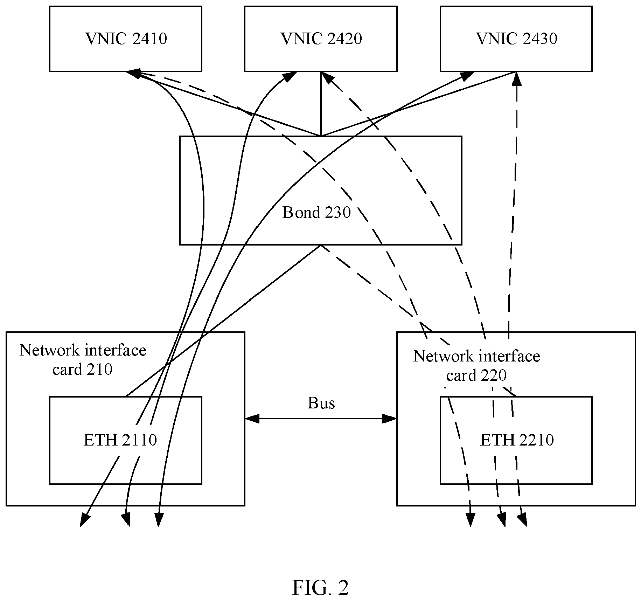

In a scenario in which a physical device includes only a single physical network interface, a plurality of physical devices may be bonded into one physical device set by using a similar principle, to provide a fault tolerance mechanism and improve availability. As shown in FIG. 2, a network interface card NIC 210 provides an Ethernet interface ETH 2110, and a network interface card NIC 220 provides an Ethernet interface ETH 2210. The NIC 210 and the NIC 220 may be directly connected to each other by using a bus or indirectly connected to each other by using a central processing unit (central processing unit, CPU) interworked with the NIC 210 and the NIC 220. The NIC 210 and the NIC 220 are bonded to obtain a physical device set, that is, a bond 230. In a process of creating the bond 230, the NIC 210 may be specified as a primary device and the NIC 220 as a secondary device. After the creation, a plurality of virtual network interface cards such as a vNIC 2410, a vNIC 2420, and a vNIC 2430 may be obtained by mapping by using the bond 230. After the mapping is completed, data of all upper-layer service applications may be aggregated to the NIC 210 by using any virtual network interface card obtained by the mapping and the bond 230, and final forwarding processing is completed by using the ETH 2110 in the NIC 210. When the NIC 210 is faulty or an external link corresponding to the NIC 210 is faulty, and data forwarding processing cannot be completed, a bond mechanism detects that the NIC 210 is abnormal, and then triggers an active-standby failover, so that the NIC 220 is switched to serve as a new primary device of the bond 230. The data of all the upper-layer service applications is aggregated to the NIC 220 by using the virtual network interface card and the bond 230, so that the NIC 220 completes data forwarding processing.

It can be understood that, in the application scenario shown in FIG. 2 in which a physical device includes a single network interface, a plurality of physical devices are bonded into one bond, and at one moment, only one physical device is in the working state. Resource utilization of the bond is relatively low, and there is no load balancing capability between the physical devices. In addition, because forwarding processing is performed on the data of all the service applications by using a same physical device, data may be forwarded across devices and a delay is relatively high. For example, when the NIC 210 is in a normal working state, the NIC 210 also needs to perform forwarding processing on data of the NIC 220, increasing a transmission delay.

To resolve the foregoing problem, this application provides a method for bonding a plurality of physical devices into a virtual device. In the method, a plurality of physical device sets are created based on the plurality of physical devices, so that at least two of the plurality of physical device sets include a same physical device. Then, one or more virtual devices are created for each physical device set, and a service application is supported by using the created virtual device, thereby improving resource utilization and a load balancing capability of the plurality of physical devices.

The technical solutions in embodiments of this application may be applied to various scenarios of physical device bonding, including but not limited to bonding of a plurality of network interface card devices, bonding of a plurality of GPUs, bonding of a plurality of NPUs, and the like. For ease of understanding, this application is described in detail by using an example in which a physical device is a network interface card device.

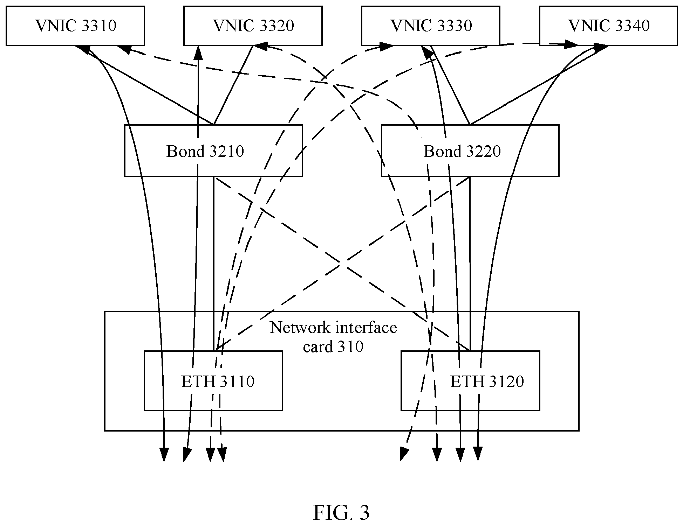

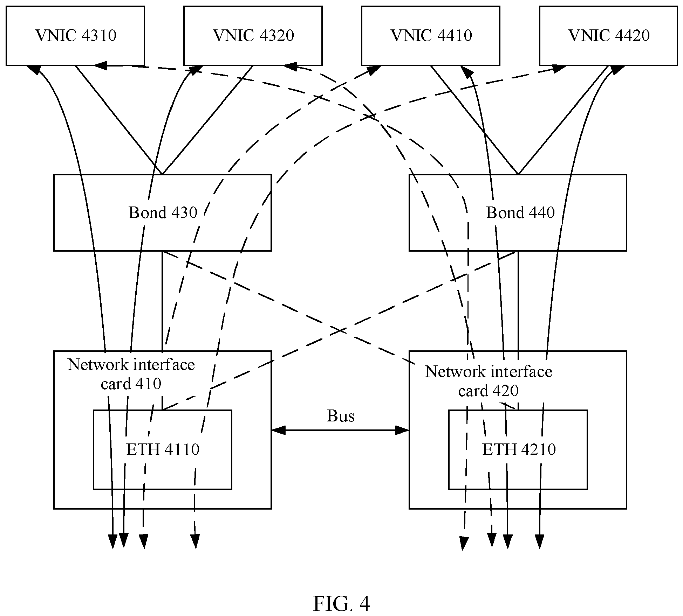

FIG. 3 is a schematic diagram of a system architecture according to an embodiment of this application. As shown in FIG. 3, a network interface card 310 provides two physical network interfaces: an ETH 3110 and an ETH 3120. Two physical device sets, namely, a bond 3210 and a bond 3220, are created based on the ETH 3110 and the ETH 3120. The ETH 3110 is a primary device of the bond 3210, and the ETH 3120 is a secondary device of the bond 3210. The ETH 3120 is a primary device of the bond 3220, and the ETH 3110 is a secondary device of the bond 3220. After the bond 3210 and the bond 3220 are created, virtual network interface cards (a vNIC 3310 and a vNIC 3320) are obtained by mapping by using the bond 3210, and virtual network interface cards (a vNIC 3330 and a vNIC 3340) are obtained by mapping by using the bond 3220. An upper-layer service application may select any virtual network interface card to perform data transmission. This can ensure that the ETH 3110 and the ETH 3120 can simultaneously participate in a communication process, and traffic can pass through both the ETH 3110 and the ETH 3120, thereby improving resource utilization and implementing load balancing. When the ETH 3110 is faulty or an external link corresponding to the ETH 3110 is faulty, and data forwarding processing cannot be completed, an active-standby failover is triggered. In this case, the primary device of the bond 3210 is switched to the ETH 3120, and forwarding processing of all data is completed by using the ETH 3120. This ensures that forwarding processing can still be normally completed on service data, and ensures system reliability. It can be understood that FIG. 3 is described by using an example in which one physical device includes a plurality of physical network interfaces. For a case in which one physical device includes only a single physical network interface, an implementation principle thereof is similar to the foregoing description. As shown in FIG. 4, a network interface card 410 provides an ETH 4110, and a network interface card 420 provides an ETH 4210. The network interface card 410 and the network interface card 420 are directly connected to each other by using a bus or connected by using a CPU interworked with the network interface card 410 and the network interface card 420. A bond 430 and a bond 440 are created based on the network interface card 410 and the network interface card 420. The network interface card 410 is a primary device of the bond 430, and the network interface card 420 is a secondary device of the bond 430. The network interface card 420 is a primary device of the bond 440, and the network interface card 410 is a secondary device of the bond 440. Then, a vNIC 4310 and a vNIC 4320 are created based on the bond 430, and a vNIC 4410 and a vNIC 4420 are created based on the bond 440. An upper-layer service application may select one of the plurality of virtual devices (for example, the vNIC 4310 and the vNIC 4320) according to a requirement to perform service processing, to prevent a plurality of service applications from using a same virtual device at a same time, thereby improving service processing efficiency. An upper-layer service application using the network interface card 410 performs data transmission by using the vNIC 4310 and the vNIC 4320, and an upper-layer service application using the network interface card 420 performs data transmission by using the vNIC 4410 and the vNIC 4420. This can avoid cross-device data transmission between the network interface card 410 and the network interface card 420, reduce a transmission delay, and improve transmission efficiency.

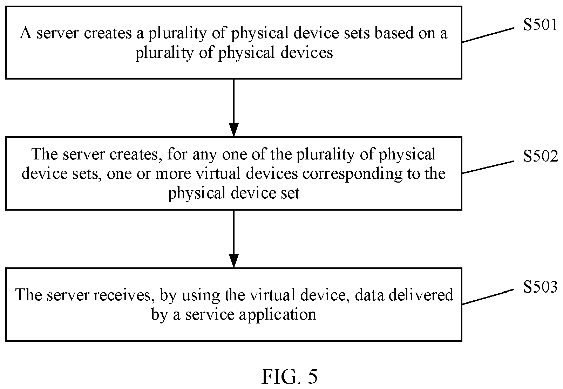

With reference to the schematic diagrams of the system architectures shown in FIG. 3 and FIG. 4, the following describes a method for bonding a plurality of physical devices into a virtual device according to an embodiment of this application. As shown in FIG. 5, the method includes but is not limited to the following steps.

S501. A server creates a plurality of physical device sets based on the plurality of physical devices.

Specifically, the server may run, by using a CPU in a kernel, code stored in a memory to create physical device sets based on the plurality of physical devices (for example, network interface cards each with a plurality of network interfaces or network interface cards each with a single network interface) deployed in the server. Each physical device set includes one primary device and at least one secondary device. The plurality of physical devices are in an active-standby relationship with each other in different physical sets, and a primary device varies with each physical device set. For example, in a case that the physical devices are network interface cards (an ETH 0 and an ETH 1), when the server creates a network interface configuration file of a physical device set (that is, a bond 0) in a file directory, a primary device parameter is added to set the ETH 0 as a primary device of the bond 0, and a network interface card support parameter is added to set the ETH 1 to support the bond 0, that is, the ETH 1 is a secondary device of the bond 0. Similarly, when the server creates a network interface configuration file of a physical device set (a bond 1) in a file directory, a primary device parameter is added to set the ETH 1 as a primary device of the bond 1, and a network interface card support parameter is added to set the ETH 0 to support the bond 1, that is, the ETH 0 is a secondary device of the bond 1. After the network interface configuration files are created, the server restarts a system or restarts a network service. In a network initialization process, an operating system of the server reads the configuration files one by one, to establish bonding relationships between each of the ETH 0 and the ETH 1 and the bond 0 and the bond 1.

Optionally, the physical device may be a GPU device, an NPU device, a network interface card device, or a network interface in a network interface card device with a plurality of network interfaces, for example, the ETH 3110 and the ETH 3120 in the network interface card 310 shown in FIG. 3, or the network interface card 410 and the network interface card 420 shown in FIG. 4.

In a possible implementation, the server may provide an input interface for a user, where the input interface is used to prompt the user to input creation parameters of the physical device sets; and then obtains, by using the input interface, the creation parameters input by the user, and creates the plurality of physical device sets based on the creation parameters.

Optionally, the input interface may include a configuration interface, an application programming interface (application programming interface, API), an input template, or the like. The user inputs the creation parameters based on the configuration interface, the API, or the input template provided by the server, so that the server can complete creation of the physical device sets based on the creation parameters.

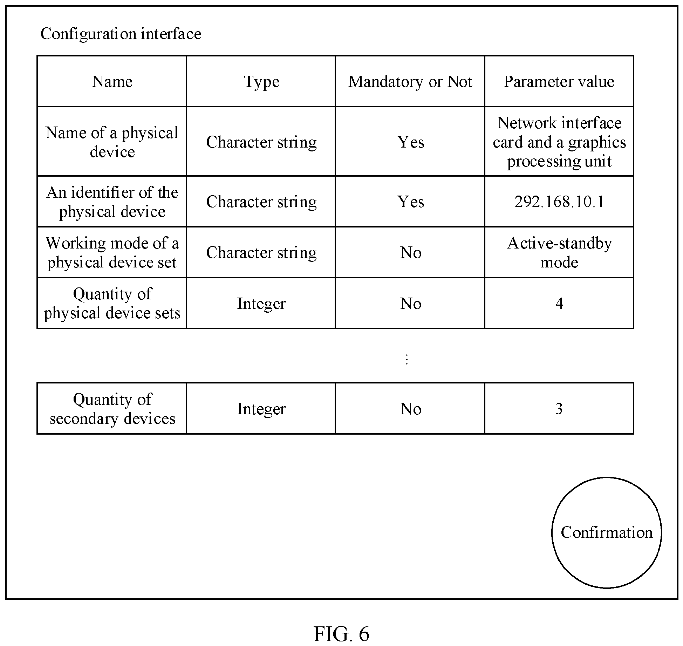

For example, as shown in FIG. 6, the user selects or inputs a name of a physical device, an identifier of the physical device, a working mode (for example, an active-standby mode) of a physical device set, a quantity of physical device sets, a quantity of secondary devices in each physical device set, and other creation parameters in the configuration interface provided by the server. After selecting all parameter configurations, the user clicks a confirmation button in the interface, and the server creates the corresponding physical device set based on the creation parameters input by the user.

It should be understood that, in a process of creating physical device sets, one physical device may belong to different physical device sets. For example, the server creates a first physical device set and a second physical device set based on physical devices deployed in the server, where a first physical device is a primary device of the first physical device set and is also a secondary device of the second physical device set, such as the ETH 3110 in FIG. 3 or the network interface card 410 in FIG. 4.

In another possible implementation, the server creates a first physical device set and a second physical device set based on a first physical device and a second physical device. A primary device of the first physical device set is a first physical device, and a primary device of the second physical device set is a second physical device.

Specifically, when the physical devices are devices each with a single network port, for example, the network interface card 410 and the network interface card 420 shown in FIG. 4, the server may create, based on a quantity of physical devices, physical device sets whose quantity is the same as the quantity of physical devices, and a primary device varies with each physical device set.

It can be easily understood that, in a process of creating physical device sets, the server specifies different physical devices as primary devices of the physical device sets. In this way, each physical device can participate in a communication process to improve resource utilization; and cross-device data transmission can be avoided between different physical devices to improve transmission efficiency.

In another possible implementation, for any one of the plurality of physical device sets, the server specifies, based on an affinity between a service application and each secondary device in the physical device set, a priority for each secondary device to become a primary device.

Specifically, when creating the physical device sets, the server may specify primary devices of the physical device sets and secondary devices of the physical device sets. A secondary device replaces a primary device when the primary device becomes faulty, so as to continue to provide a service. When a plurality of secondary devices exist in the physical device set, the server may specify, based on the affinity between the service application and each secondary device, the priority for each secondary device to become the primary device, so that when an original primary device is faulty, a secondary device with a higher priority preferably becomes a new primary device.

Optionally, the server may specify the priority of the secondary device based on a connection relationship between a processor corresponding to the service application and the secondary device. For example, the server may specify a priority of a secondary device directly connected to the processor corresponding to the service application as a first priority, and specify a priority of a secondary device adjacent to the processor corresponding to the service application as a second priority. When the primary device is faulty, the secondary device with the first priority preferably becomes a new primary device. It can be understood that, specifying a priority in this manner can effectively reduce a link delay when a primary device is faulty.

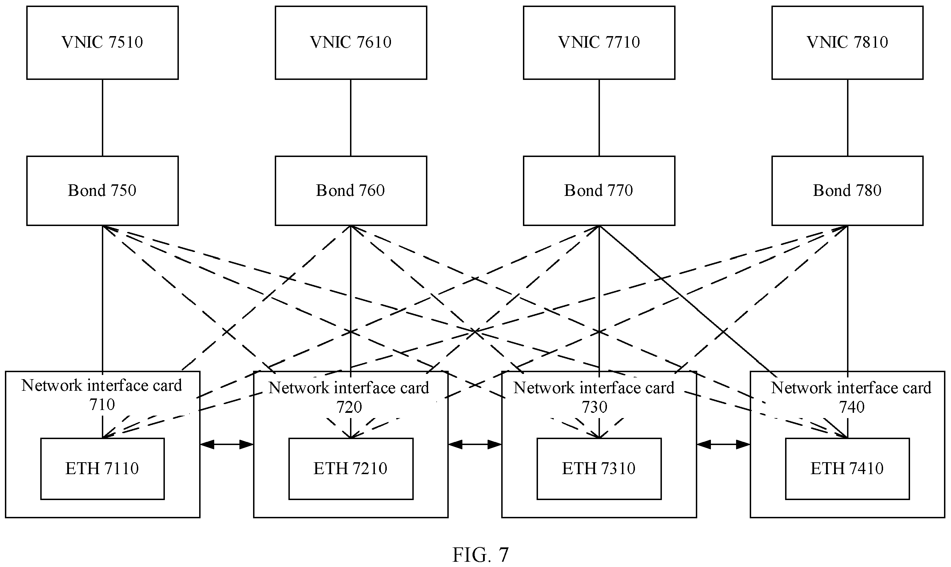

For example, as shown in FIG. 7, a network interface card 710 provides an ETH 7110, a network interface card 720 provides an ETH 7210, a network interface card 730 provides an ETH 7310, and a network interface card 740 provides an ETH 7410. These network interface cards are connected to each other by using an internal bus, and four physical device sets, that is, a bond 750, a bond 760, a bond 770, and a bond 780, are created based on the foregoing four network interface card devices. A primary device of the bond 750 is the network interface card 710, and secondary devices thereof are the network interface card 720, the network interface card 730, and the network interface card 740. A primary device of the bond 760 is the network interface card 720, and secondary devices thereof are the network interface card 710, the network interface card 730, and the network interface card 740. A primary device of the bond 770 is the network interface card 730, and secondary devices thereof are the network interface card 710, the network interface card 720, and the network interface card 740. A primary device of the bond 780 is the network interface card 740, and secondary devices thereof are the network interface card 710, the network interface card 720, and the network interface card 730. In addition, corresponding virtual devices (for example, a vNIC 7510 and a vNIC 7610) are created based on the physical device sets. When creating the physical device sets, the server specifies priorities of the secondary devices in the physical device sets. For example, for the bond 750, the network interface card 720 is directly connected to the network interface card 710, and corresponds to minimum forwarding overheads. Therefore, a priority of the network interface card 720 is set to a first priority. The network interface card 730 is indirectly connected to the network interface card 710 by using the network interface card 720, and corresponds to forwarding overheads higher than those of the network interface card 720. Therefore, a priority of the network interface card 730 is set to a second priority. The network interface card 740 is connected to the network interface card 710 by using the network interface card 720 and the network interface card 730, and corresponds to higher forwarding overheads and a lower priority. In normal working, the bond 750 supports an upper-layer service application by using the network interface card 710. When the network interface card 710 is faulty, the bond 750 preferably selects the network interface card 720 as a new primary device to take over work of the network interface card 710. In this case, the bond 750 and the bond 760 jointly use the network interface card 720 to support upper-layer service applications and complete data forwarding processing.

Alternatively, the server specifies the priorities of the secondary devices based on sizes of available resources of the secondary devices. For example, the server obtains bandwidths for network interfaces of the secondary devices to connect to an external network, and specifies the priority of a secondary device with a highest bandwidth as a first priority. When the primary device is faulty, the secondary device with the first priority preferably becomes a new primary device. This manner can ensure that when a primary device is faulty, a new primary device has enough bandwidth resources to support an upper-layer service application.

Alternatively, the server specifies the priorities of the secondary devices based on upgrade overheads of the secondary devices. For example, the server calculates resource overheads (such as bandwidth resource overheads, CPU resource overheads, and memory resource overheads) corresponding to each secondary device for becoming a new primary device, and specifies the priority of a secondary device with minimum resource overheads as a first priority. When the primary device is faulty, the secondary device with the first priority preferably becomes a new primary device. It can be learned that, specifying the priorities in this manner can ensure that when a primary device is faulty, a newly selected primary device consumes minimum resources, thereby improving system resource utilization.

It should be noted that the server may select any one of the foregoing manners to specify the priorities, or may specify the priorities by combining the foregoing plurality of manners. This is not limited in this application. For example, the server allocates weights to the foregoing three manners, and the weights are respectively 40%, 30%, and 30%. Then, the server calculates a comprehensive score of each secondary device, and specifies a priority based on the comprehensive score. To be specific, a connection relationship between a CPU corresponding to a service application and a secondary device occupies the weight of 40%, a size of an available resource of a secondary device occupies the weight of 30%, and upgrade overheads of a secondary device occupy the weight of 30%. The server calculates a comprehensive score of each secondary device, and specifies a priority of a secondary device with a highest comprehensive score as a first priority. When a primary device is faulty, the secondary device with the first priority preferably becomes a new primary device.

S502. The server creates, for any one of the plurality of physical device sets, one or more virtual devices corresponding to the physical device set.

Specifically, after creating a bonding device, the server performs mapping based on each physical device set to obtain one or more virtual devices, for example, the vNIC 3310 and the vNIC 3320 shown in FIG. 3 and the vNIC 4310 and the vNIC 4320 shown in FIG. 4, for use by an upper-layer service application. It should be understood that, although a physical device set may be mapped to a plurality of virtual devices, forwarding processing on service traffic of all the virtual devices is actually completed by a primary device of the physical device set. For example, forwarding processing on service traffic of the vNIC 3310 and the vNIC 3320 in FIG. 3 is actually completed by the ETH 3110, and forwarding processing on service traffic of the vNIC 4310 and the vNIC 4320 in FIG. 4 is actually completed by the network interface card 410.

In another possible implementation, the server creates, for any one of the plurality of physical device sets, one or more virtual devices that match the service application, and provides a service for the service application by using the virtual device.

Specifically, the server creates, based on each physical device set, a virtual device that matches a service application, so that the service application can deliver service traffic by using the matched virtual device. In this way, a plurality of physical devices can simultaneously participate in a communication process, thereby improving resource utilization and implementing load balancing of the plurality of physical devices.

In another possible implementation, the server specifies a priority of the virtual device, so that the virtual device uses a resource based on the specified priority.

Specifically, during creation of a virtual device based on a physical device set, the server may specify a priority of each virtual device when a plurality of virtual devices are created. For example, a priority may be specified based on a degree of matching between a service application and each virtual device, and a virtual device with a high priority preferably uses a resource. This can ensure that a more urgent service is preferably processed, and traffic congestion is avoided.

S503. The server receives, by using the virtual device, data delivered by a service application.

Specifically, the upper-layer service application delivers service traffic by using the created virtual device, for example, delivers the service traffic by using the vNIC 3310 and the vNIC 3320 shown in FIG. 3 or the vNIC 4310 and the vNIC 4320 shown in FIG. 4, so that a physical device (for example, the ETH 3110 or the network interface card 410) corresponding to the virtual device receives the service traffic delivered by the service application and completes a forwarding process.

In another possible implementation, the server creates a first virtual device based on a first physical device set; and if service traffic of the first physical device exceeds a first preset threshold, the server adjusts a correspondence between the first virtual device and the first physical device set, so that the first virtual device corresponds to the second physical device set.

Specifically, after creating, based on a physical device set, a virtual device corresponding to the physical device set, the server may dynamically adjust a correspondence between the virtual device and the physical device set based on a state of a primary device of the physical device set. When service traffic of the primary device of the physical device set exceeds a preset threshold, it indicates that the primary device is already relatively congested at present and is not suitable for continuing to receive service traffic delivered by an upper-layer service application. In this case, the server adjusts the correspondence between the virtual device and the physical device set, so that the virtual device corresponds to another physical device set (for example, a physical device set with an idle primary device). In this way, forwarding processing on the upper-layer service traffic is completed by a primary device of the another physical device set, to reduce forwarding load of the primary device of the physical device set and improve running efficiency of the entire system. The first preset threshold may be set based on an actual situation, and is not limited in this application.

For example, in the application scenario shown in FIG. 4, the primary device of the bond 430 is the network interface card 410. The upper-layer service application delivers the service traffic to the network interface card 410 by using the vNIC 4310 and the vNIC 4320 that are created based on the bond 430. When service traffic of the network interface card 410 exceeds a preset threshold, a correspondence between the vNIC 4310 and the bond 430 and/or a correspondence between the vNIC 4320 and the bond 430 are/is adjusted, so that the vNIC 4310 and/or the vNIC 4320 correspond/corresponds to the bond 440. After the adjustment is completed, forwarding load of the network interface card 410 is reduced. The service traffic delivered by the upper-layer service application arrives at the bond 440 by using the vNIC 4310 and/or the vNIC 4320. Finally, forwarding processing is completed by using the network interface card 420, thereby implementing load balancing between the network interface card 410 and the network interface card 420.

In another possible implementation, the first physical device set includes the first physical device and the second physical device; and if service traffic of the first physical device exceeds a second preset threshold, the server adjusts a flow direction of the service traffic, so that the first physical device set delivers the service traffic by using the second physical device.

Specifically, after creating a physical device set, the server may dynamically adjust a flow direction of service traffic based on a state of each physical device in the physical device set. When the service traffic of the first physical device exceeds the second preset threshold, the server adjusts the flow direction of the service traffic by using the first physical device set, so that the service traffic flows to the second physical device, thereby reducing processing load of the first physical device and implementing load balancing of the plurality of physical devices.

For example, in the foregoing scenario shown in FIG. 4, the bond 430 includes the network interface card 410 and the network interface card 420. When service traffic of the network interface card 410 exceeds a preset threshold, a flow direction of the service traffic is adjusted by using the bond 430, so that the service traffic flows to the network interface card 420, thereby reducing processing load of the network interface card 410 and implementing load balancing between the network interface card 410 and the network interface card 420.

In another possible implementation, after the virtual device is created based on the physical device set, the server receives test information delivered by the service application, where the test information is used to test processing delays of virtual devices corresponding to the plurality of physical device sets; and determines the processing delays of the virtual devices corresponding to the plurality of physical device sets, and selects a virtual device corresponding to a minimum processing delay to support the service application.

Specifically, the service application can complete service delivery only by relying on the virtual device. However, performance varies with each virtual device. The service application needs to determine a virtual device with high performance in the virtual devices and complete final service delivery. Therefore, before delivering an actual service, the service application needs to perform a performance test on all existing virtual devices. For example, the service application may traverse all the virtual devices, send test information to each virtual device, determine a processing delay of each virtual device based on feedback information of the test information, and select a virtual device corresponding to a minimum delay to deliver the service.

Using four devices each with a single network interface as examples, the following further describes in detail the method for bonding a plurality of physical devices into a virtual device provided in this application.

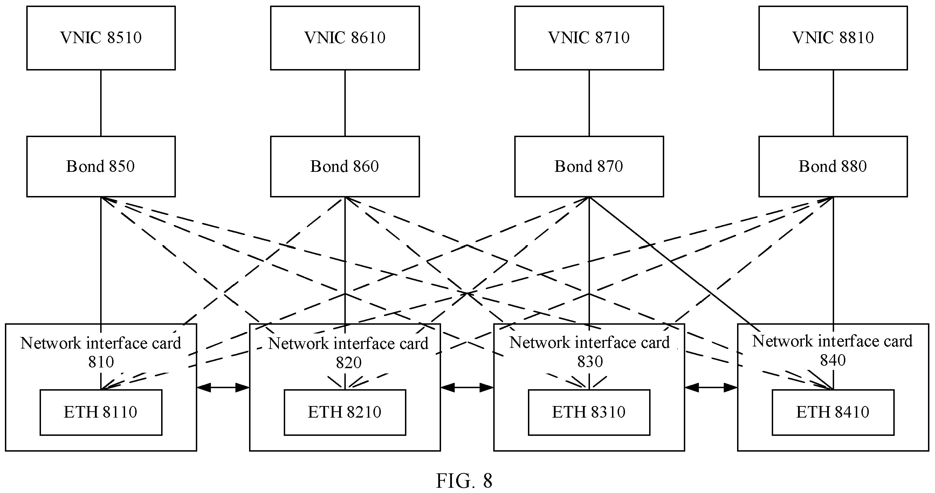

As shown in FIG. 8, four network interface cards are deployed in the server. A network interface card 810 provides an ETH 8110, a network interface card 820 provides an ETH 8210, a network interface card 830 provides an ETH 8310, and a network interface card 840 provides an ETH 8410. These network interface cards are connected to each other by using a bus. The server 800 creates a bond 850 based on the four network interface cards, specifies the network interface card 810 as a primary device, and specifies the network interface card 820, the network interface card 830, and the network interface card 840 as secondary devices that have progressively lower priorities in becoming a primary device. The server 800 creates a vNIC 8510 based on the bond 850 for use by an upper-layer service application, and actual traffic all passes through the network interface card 810. The server 800 creates a bond 860, specifies the network interface card 820 as a primary device, and specifies the network interface card 830, the network interface card 840, and the network interface card 810 as secondary devices that have progressively lower priorities in becoming a primary device. The server 800 creates a vNIC 8610 based on the bond 860 for use by an upper-layer service application, and actual traffic all passes through the network interface card 820. The server 800 creates a bond 870, specifies the network interface card 830 as a primary device, and specifies the network interface card 840, the network interface card 820, and the network interface card 810 as secondary devices that have progressively lower priorities in becoming a primary device. The server 800 creates a vNIC 8710 based on the bond 870 for use by an upper-layer service application, and actual traffic all passes through the network interface card 830. The server 800 creates a bond 880, specifies the network interface card 840 as a primary device, and specifies the network interface card 830, the network interface card 820, and the network interface card 810 as secondary devices that have progressively lower priorities in becoming a primary device. The server 800 creates a vNIC 8810 based on the bond 880 for use by an upper-layer service application, and actual traffic all passes through the network interface card 840.

It can be learned that, each physical device is a primary device and participates in a communication process. This improves resource utilization, implements redundancy backup of network interface resources across devices, and improves system reliability. Each physical device uses its own Ethernet interface to perform forwarding processing, thereby avoiding forwarding data across devices. In addition, specifying a priority of a secondary device in becoming a primary device ensures that when a primary device is faulty, a secondary device with a highest priority may be selected as a new primary device, thereby reducing a link delay.

It should be noted that, the method for bonding a plurality of physical devices into a virtual device shown in FIG. 8 follows a principle same as that in FIG. 5. For the principle, refer to related descriptions in steps S501 to S503 in FIG. 5. For brevity, details are not described herein again.

The foregoing describes the method in the embodiments of this application in detail. To better implement the foregoing solutions in the embodiments of this application, correspondingly, the following further provides a related apparatus for cooperatively implementing the foregoing solutions.

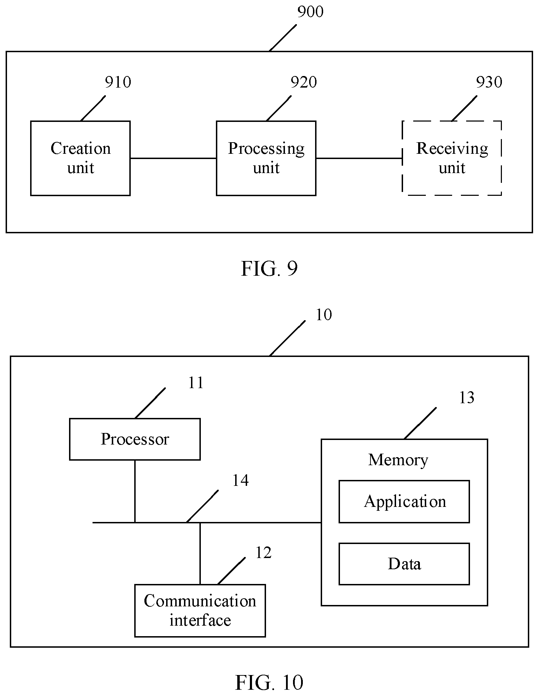

FIG. 9 is a schematic diagram of a structure of a computing device according to an embodiment of this application. The computing device may be the server in the foregoing method embodiment shown in FIG. 5, and may perform the methods and steps performed by the server in the method embodiment for bonding a plurality of physical devices into a virtual device shown in FIG. 5. As shown in FIG. 9, the computing device 900 includes a creation unit 910 and a processing unit 920.

The creation unit 910 is configured to create a plurality of physical device sets based on the plurality of physical devices, where at least two of the plurality of physical device sets include a same physical device.

The creation unit 910 is further configured to create, for any one of the plurality of physical device sets, one or more virtual devices corresponding to the physical device set.

The processing unit 920 is configured to receive, by using the virtual device, data delivered by a service application.

Specifically, the creation unit 910 is configured to perform step S501 and step S502, and optionally perform an optional method in the foregoing steps. The processing unit 920 is configured to perform step S503, and optionally perform an optional method in the foregoing steps. The foregoing two units may perform data transmission between each other through a communication channel. It should be understood that each unit included in the computing device 900 may be a software unit or a hardware unit, or may be partially a software unit and partially a hardware unit.

In an embodiment, the computing device 900 further includes a receiving unit 930, where the receiving unit 930 is configured to provide an input interface; and the creation unit 910 is further configured to create the plurality of physical device sets based on creation parameters.

In an embodiment, the creation unit 910 is specifically configured to create a first physical device set and a second physical device set based on a first physical device and a second physical device, where the first physical device set and the second physical device set each include a primary device and at least one secondary device, the primary device of the first physical device set is the first physical device, and the primary device of the second physical device set is the second physical device.

In an embodiment, the creation unit 910 is further configured to create a first virtual device based on the first physical device set; and the processing unit 920 is further configured to: if service traffic of the first physical device exceeds a first preset threshold, adjust a correspondence between the first virtual device and the first physical device set, so that the first virtual device corresponds to the second physical device set.

In an embodiment, the first physical device set includes the first physical device and the second physical device, and the processing unit 920 is further configured to: if service traffic of the first physical device exceeds a second preset threshold, adjust a flow direction of the service traffic, so that the first physical device set delivers the service traffic by using the second physical device.

In an embodiment, the processing unit 920 is further configured to specify, based on an affinity between the service application and each secondary device in the any one of the plurality of physical device sets, a priority for each secondary device to become a primary device.

In an embodiment, the processing unit 920 is specifically configured to specify, based on a connection relationship between a processor corresponding to the service application and each secondary device, the priority for each secondary device to become the primary device; or specify, based on a size of an available resource of each secondary device, the priority for each secondary device to become the primary device; or specify, based on a size of a resource to be consumed for upgrading each secondary device to the primary device, the priority for each secondary device to become the primary device.

In an embodiment, the receiving unit 930 is further configured to receive test information delivered by the service application, where the test information is used to test processing delays of virtual devices corresponding to the plurality of physical device sets; and the processing unit 920 is further configured to: determine the processing delays of the virtual devices corresponding to the plurality of physical device sets, and select a virtual device corresponding to a minimum processing delay to receive the data delivered by the service application.

In an embodiment, the processing unit 920 is further configured to specify priorities of the one or more virtual devices corresponding to the any one of the plurality of physical device sets, so that the one or more virtual devices corresponding to the any one of the plurality of physical device sets use resources based on the specified priorities.

It should be understood that the foregoing structure of the computing device is merely an example, and should not constitute a specific limitation. The units of the computing device may be added, reduced, or combined according to a requirement. In addition, operations and/or functions of the units in the computing device each are intended to implement a corresponding procedure of the method described in FIG. 5. For brevity, details are not described herein again.

FIG. 10 is a schematic diagram of a structure of another computing device according to an embodiment of this application. As shown in FIG. 10, the computing device 10 includes a processor 11, a communication interface 12, and a memory 13. The processor 11, the communication interface 12, and the memory 13 are connected to each other by using an internal bus 14.

The computing device 10 may be the server in the method embodiment in FIG. 5. The functions performed by the server in the method embodiment described in FIG. 5 are actually performed by the processor 11 of the server.

The processor 11 may include one or more general-purpose processors, such as a central processing unit (central processing unit, CPU) or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The bus 14 may be a peripheral component interconnect (peripheral component interconnect, PCI) bus, an extended industry standard architecture (extended industry standard architecture, EISA) bus, or the like. The bus 14 may be classified into an address bus, a data bus, a control bus, and the like. For ease of representation, only one thick line is for representing the bus in FIG. 10, but this does not mean that there is only one bus or only one type of bus.

The memory 13 may include a volatile memory (volatile memory), for example, a random access memory (random access memory, RAM). The memory 13 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 13 may further include a combination of the foregoing types. Program code may be used to implement the functional units shown in the computing device 900, or used to implement the method steps performed by the server in the method embodiment shown in FIG. 5.

An embodiment of this application further provides a computer-readable storage medium, and a computer program is stored on the computer-readable storage medium. When the program is executed by a processor, some or all of the steps described in any one of the foregoing method embodiments may be implemented, and a function of any functional unit described in FIG. 9 is implemented.

An embodiment of this application further provides a computer program product. When the computer program product runs on a computer or a processor, the computer or the processor is enabled to perform one or more steps in any one of the foregoing methods. When each compositional unit of the foregoing device is implemented in a form of a software functional unit and sold or used as an independent product, the compositional unit may be stored in a computer-readable storage medium.

In the foregoing embodiments, the descriptions of each embodiment have respective focuses. For a part that is not described in detail in an embodiment, refer to related descriptions in other embodiments.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A method for bonding a plurality of physical devices into a virtual device, comprising:
creating a plurality of physical device sets based on the plurality of physical devices, wherein at least two of the plurality of physical device sets comprise a same physical device;
creating, for any one of the plurality of physical device sets, one or more virtual devices corresponding to the physical device set; and
receiving, by using the virtual device, data delivered by a service application.

2. The method according to claim 1, wherein before the creating a plurality of physical device sets based on the plurality of physical devices, the method further comprises:
providing an input interface, wherein the input interface is used to prompt a user to input creation parameters of the physical device sets; and
obtaining the creation parameters by using the input interface; and
the creating a plurality of physical device sets based on the plurality of physical devices comprises:
creating the plurality of physical device sets based on the creation parameters.

3. The method according to claim 1 or 2, wherein the creating a plurality of physical device sets based on the plurality of physical devices comprises:
creating a first physical device set and a second physical device set based on a first physical device and a second physical device, wherein the first physical device set and the second physical device set each comprise a primary device and at least one secondary device, the primary device of the first physical device set is the first physical device, and the primary device of the second physical device set is the second physical device.

4. The method according to claim 3, wherein the creating, for any one of the plurality of physical device sets, one or more virtual devices corresponding to the physical device set comprises:
creating a first virtual device based on the first physical device set; and
after creating a first virtual device, the method further comprises:
if service traffic of the first physical device exceeds a first preset threshold, adjusting a correspondence between the first virtual device and the first physical device set, so that the first virtual device corresponds to the second physical device set.

5. The method according to claim 3, wherein the method further comprises:
the first physical device set comprises the first physical device and the second physical device; and if service traffic of the first physical device exceeds a second preset threshold, adjusting a flow direction of the service traffic, so that the first physical device set delivers the service traffic by using the second physical device.

6. The method according to claim 4 or 5, wherein after the creating a plurality of physical device sets based on the plurality of physical devices, the method further comprises:
for any one of the plurality of physical device sets, specifying, based on an affinity between the service application and each secondary device in the any one of the plurality of physical device sets, a priority for each secondary device to become a primary device.

7. The method according to claim 6, wherein the specifying, based on an affinity between the service application and each secondary device in the any one of the plurality of physical device sets, a priority for each secondary device to become a primary device comprises:
specifying, based on a connection relationship between a processor corresponding to the service application and each secondary device, the priority for each secondary device to become the primary device; or
specifying, based on a size of an available resource of each secondary device, the priority for each secondary device to become the primary device; or
specifying, based on a size of a resource to be consumed for updating each secondary device to the primary device, the priority for each secondary device to become the primary device.

8. The method according to any one of claims 1 to 7, wherein before the receiving, by using the virtual device, data delivered by a service application, the method further comprises:
receiving test information delivered by the service application, wherein the test information is used to test processing delays of virtual devices corresponding to the plurality of physical device sets; and
determining the processing delays of the virtual devices corresponding to the plurality of physical device sets, and selecting a virtual device corresponding to a minimum processing delay to receive the data delivered by the service application.

9. The method according to any one of claims 1 to 8, wherein after the creating, for any one of the plurality of physical device sets, one or more virtual devices corresponding to the physical device set, the method further comprises:
specifying priorities of the one or more virtual devices corresponding to the any one of the plurality of physical device sets, so that the one or more virtual devices corresponding to the any one of the plurality of physical device sets use resources based on the specified priorities.

10. A computing device, comprising:
a creation unit, configured to create a plurality of physical device sets based on a plurality of physical devices, wherein at least two of the plurality of physical device sets comprise a same physical device, wherein
the creation unit is further configured to create, for any one of the plurality of physical device sets, one or more virtual devices corresponding to the physical device set; and
a processing unit, configured to receive, by using the virtual device, data delivered by a service application.

11. The computing device according to claim 10, wherein the computing device further comprises a receiving unit;
the receiving unit is configured to provide an input interface, and the input interface is used to prompt a user to input creation parameters of the physical device sets; and
the creation unit is further configured to create the plurality of physical device sets based on the creation parameters.

12. The computing device according to claim 10 or 11, wherein the creation unit is specifically configured to:
create a first physical device set and a second physical device set based on a first physical device and a second physical device, wherein the first physical device set and the second physical device set each comprise a primary device and at least one secondary device, the primary device of the first physical device set is the first physical device, and the primary device of the second physical device set is the second physical device.

13. The computing device according to claim 12, wherein
the creation unit is further configured to create a first virtual device based on the first physical device set; and
the processing unit is further configured to: if service traffic of the first physical device exceeds a first preset threshold, adjust a correspondence between the first virtual device and the first physical device set, so that the first virtual device corresponds to the second physical device set.

14. The computing device according to claim 12, wherein the first physical device set comprises the first physical device and the second physical device; and
the processing unit is further configured to: if service traffic of the first physical device exceeds a second preset threshold, adjust a flow direction of the service traffic, so that the first physical device set delivers the service traffic by using the second physical device.

15. The computing device according to any one of claims 10 to 14, wherein
the processing unit is further configured to specify, based on an affinity between the service application and each secondary device in the any one of the plurality of physical device sets, a priority for each secondary device to become a primary device.

16. The computing device according to claim 15, wherein the processing unit is specifically configured to:
specify, based on a connection relationship between a processor corresponding to the service application and each secondary device, the priority for each secondary device to become the primary device; or
specify, based on a size of an available resource of each secondary device, the priority for each secondary device to become the primary device; or
specify, based on a size of a resource to be consumed for updating each secondary device to the primary device, the priority for each secondary device to become the primary device.

17. The computing device according to any one of claims 9 to 16, wherein
the receiving unit is further configured to receive test information delivered by the service application, and the test information is used to test processing delays of virtual devices corresponding to the plurality of physical device sets; and
the processing unit is further configured to determine the processing delays of the virtual devices corresponding to the plurality of physical device sets, and select a virtual device corresponding to a minimum processing delay to receive the data delivered by the service application.

18. The computing device according to any one of claims 9 to 17, wherein
the processing unit is further configured to specify priorities of the one or more virtual devices corresponding to the any one of the plurality of physical device sets, so that the one or more virtual devices corresponding to the any one of the plurality of physical device sets use resources based on the specified priorities.

19. A computing device, wherein the computing device comprises a memory and a processor, and the processor executes computer instructions stored in the memory, to enable the computing device to perform the method according to any one of claims 1 to 9.

20. A computer-readable storage medium, wherein the computer-readable storage medium stores a computer program, and when the computer program is executed by a processor, a function of the method according to any one of claims 1 to 9 is implemented.
